**Europäisches Patentamt**

**European Patent Office**

**Office européen des brevets**

(11) Numéro de publication: **0 174 243**

**A1**

## (12) DEMANDE DE BREVET EUROPEEN

(21) Numéro de dépôt: **85401631.8**

(22) Date de dépôt: **09.08.85**

(51) Int. Cl.⁴: **B 60 T 1/06**
**B 62 D 7/16, F 16 D 55/22**

(30) Priorité: **09.08.84 FR 8412586**

(43) Date de publication de la demande:
**12.03.86 Bulletin 86/11**

(84) Etats contractants désignés:
**DE GB IT SE**

(71) Demandeur: **RENAULT VEHICULES INDUSTRIELS**
**Société Anonyme dite:**
**129 rue Servient "La Part Dieu"**
**F-69003 Lyon(FR)**

(72) Inventeur: **Berthon, Patrick**
**26, rue 6ème**
**F-69800 Saint-Priest(FR)**

(72) Inventeur: **Bosc, Jacques**
**2, avenue Marcel Cachin**
**F-69200 Venissieux(FR)**

(74) Mandataire: **Ernst-Schonberg, Michel**
**R.N.U.R. S. 0804 B.P. 103 8 & 10, avenue Emile-Zola**
**F-92109 Boulogne Billancourt(FR)**

(54) **Dispositif de montage d'un étrier de frein à disque sur un porte fusée de roue de véhicule automobile.**

(57) Dispositif de montage d'un étrier de frein à disque (25) sur un porte-fusée (10) de roue de véhicule automobile dans lequel l'étrier de frein (25) est monté sur une bride (15) rigidement reliée au porte-fusée (10) dans lequel ladite bride (15) est traversée perpendiculairement par la fusée de la roue portant un palier à corps roulants dont une bague est solidaire en rotation du disque de frein et de la roue à freiner, caractérisé par le fait que la bride (15) possède deux branches radiales (22, 23) entre lesquelles est monté l'étrier de frein (25) et une troisième branche (24) support d'une rotule de commande de direction (41) dont l'ensemble s'étend radialement à partir d'une zone de centrage et de fixation de la bride (15) en relation avec la fusée (10).

FIG.2

EP 0 174 243 A1

DISPOSITIF DE MONTAGE D'UN ETRIER DE FREIN A DISQUE SUR
UN PORTE FUSEE DE ROUE DE VEHICULE AUTOMOBILE.

L'invention concerne un dispositif de montage d'un étrier de frein à
disque sur un porte-fusée de roue de véhicule automobile dans lequel
l'étrier de frein est monté sur une bride rigidement reliée au
porte-fusée et dans lequel ladite bride est traversée axialement par la
fusée de roue portant un palier à corps roulants dont une bague est
solidaire en rotation du disque de freinage et de la roue à freiner.

On sait que le porte-fusée assure usuellement les fonctions de support
de l'étrier du frein à disque et de celui des rotules de direction et
de suspension et que l'ensemble de ces parties fonctionnelles est logé
dans la jante de la roue.

Sur un véhicule industriel l'encombrement des éléments du porte-fusée
et du frein empêchent l'emploi d'une telle disposition.

L'invention à donc pour objet un support de montage d'un étrier de
frein à disque plus simple qui transmet le couple de freinage au
porte-fusée dont l'encombrement radial correspond sensiblement à celui
des montages conventionnels utilisés sur les véhicules de tourisme.

Selon l'invention la bride porte-étrier possède deux branches radiales
entre lesquelles est monté l'étrier de frein et une troisième branche
support d'une rotule de commande de direction dont l'ensemble
s'étend radialement à partir d'une zone de centrage et de fixation de
la bride en relation avec la fusée et le porte-fusée.

Selon une autre caractéristique du dispositif la bride possède une
configuration périphérique plane susceptible d'être réalisée
économiquement par matriçage.

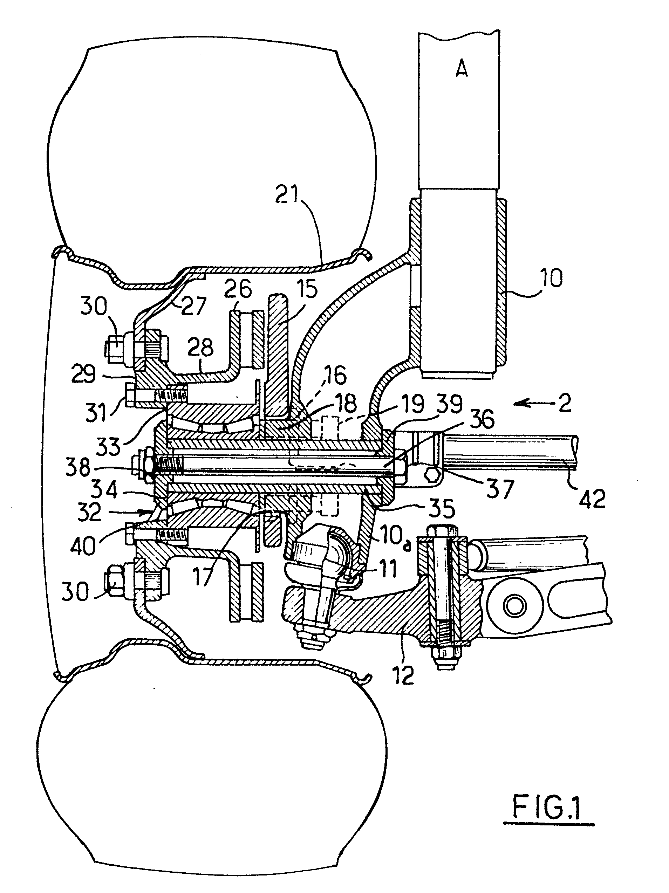

D'autres caractéristiques et avantages de l'invention ressortiront de la
description d'un mode de réalisation de celle-ci en référence au dessin
annexé dans lequel la figure 1 est une vue en coupe axiale de
l'agencement au montage de la roue selon la ligne 1-1 de la figure
2.

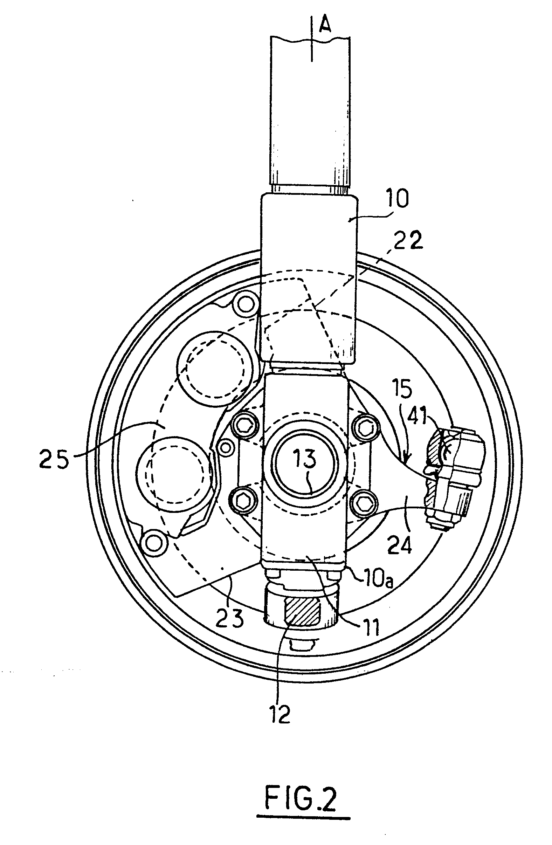

La figure 2 est une vue en élévation du montage vu selon la flèche 2 de la figure 1.

La figure 3 est une représentation schématique en perspective d'une partie du porte-fusée et de la bride porte-étrier.

L'agencement représenté au dessin comprend un porte-fusée 10 dont la partie supérieure est rendue solidaire d'un élément de châssis au moyen d'un axe A. La partie inférieure 10a du porte-fusée porte un joint à rotule 11 sur lequel agit un bras de suspension 12 de la roue.

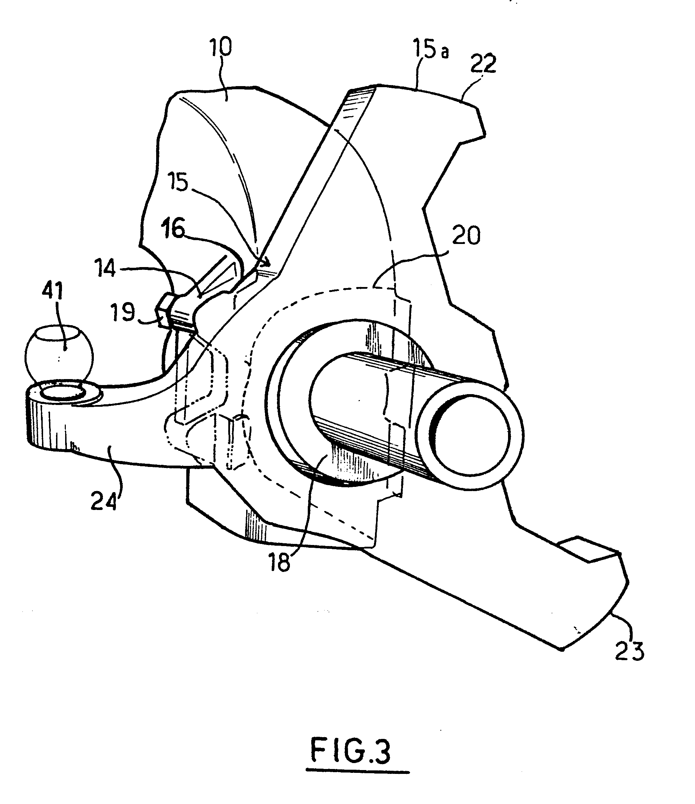

Une ouverture 13 est destinée au passage de la fusée de la roue à freiner dont l'agencement sera décrit ci-après. L'ouverture 13 porte à sa périphérie quatre trous de fixation d'une bride rapportée 15. La face 15a de la bride tournée vers le porte-fusée 10 porte une rainure d'encastrement 16 dont les flancs sont en appui sur le porte-fusée 10 ainsi que cela est montré à la figure 3.

La bride 15 possède un oriffice central 17 qui assure le centrage du nez 18 du porte-fusée ainsi que cela est montré à la figure 1 et 3. Au voisinage de l'oriffice 17 , la bride 15 présente des taraudages dans lesquels sont montées les vis de fixation 19 qui solidarisent axialement la bride 15 au porte-fusée 10. La bride 15 s'étend radialement à partir de sa zone de fixation 20 portant les taraudages précités vers la jante de la roue à freiner 21, par des branches radiales 22, 23, 24 réparties angulairement.

Chacune des branches radiales 22, 23, 24 est raccordée à la zone de fixation 20 par une base élargie dans le but de conférer à celles-ci une résistance suffisante aux efforts tangentiels.

Entre les branches 22, 23 est monté l'étrier 25 du frein représenté ici schématiquement dans lequel est monté à rotation le disque de frein 26.

Le disque 26 s'étend axialement vers le voile 27 de la roue 21 par un moyeu 28 dont l'extrémité opposée au disque 26 porte une bride

0174243

de fixation 29. La bride 29 s'étend radialement vers l'extérieur du moyeu 28 par une collerette destinée à recevoir les boulons de fixation 30 de la roue 21, et vers l'intérieur du moyeu 28 par une autre collerette destinée à recevoir les vis de fixation 31 de la bague extérieure 33 du palier 32 à deux rangées de corps roulants. La bague intérieure 34 est montée sur la fusée constituée, ainsi que cela est visible à la figure 1, par un manchon 35 traversé par un boulon 36 dont la tête 37 et l'écrou 38 sont respectivement en appui sur des rondelles de serrages 39, 40 qui immobilisent axialement les divers constituants du montage contre le porte-fusée 10.

La branche 24 de la bride 15 porte une rotule 41 de direction qui commande l'orientation de la bride 15 et par voie de conséquence celle du porte-fusée sous l'action d'une bielle de direction 42.

REVENDICATIONS

1. Dispositif de montage d'un étrier de frein à disque (25) sur un porte-fusée (10) de roue (21) de véhicule automobile dans lequel l'étrier de frein (25) est monté sur une bride (15) rigidement reliée au porte-fusée (10) et dans lequel ladite bride (15) est traversée perpendiculairement par la fusée (35) de la roue portant un palier à corps roulants (32) dont une bague (33) est solidaire en rotation du disque de frein (26) et de la roue à freiner (21), caractérisé par le fait que la bride (15) possède deux branches radiales (22, 23) entre lesquelles est monté l'étrier de frein (25) et une troisième branche (24) support d'une rotule de commande de direction (41) dont l'ensemble s'étend radialement à partir d'une zone de centrage et de fixation de la bride (15) en relation avec la fusée (35) et le porte-fusée (10).

2. Dispositif selon la revendication 1, caractérisé par le fait que la bride (15) de configuration générale plane possède une face (15a) coiffant partiellement le porte-fusée (10).

3. Dispositif selon l'une des revendications 1 ou 2, caractérisé par le fait que les branches (22, 23, 24) de la bride sont raccordées à la zone de centrage et de fixation, par une base élargie.

493

FIG.1

## FIG.2

FIG.3

Office européen
des brevets

## RAPPORT DE RECHERCHE EUROPEENNE

## DOCUMENTS CONSIDERES COMME PERTINENTS

| Catégorie | Citation du document avec indication. en cas de besoin, des parties pertinentes | Revendication concernee | CLASSEMENT DE LA DEMANDE (Int Cl 4) |
|---|---|---|---|
| A | CH-A- 573 558 (KLAUE) <br> * Colonne 2, ligne 67 - colonne 3, ligne 58; figures 4-6 * | 1 | B 60 T 1/06 <br> B 62 D 7/16 <br> F 16 D 55/22 |
| A | US-A-3 941 221 (PRINGLE) | | |
| A | FR-A-1 372 684 (GIRLING) | | |
| A | DE-A-1 947 041 (GENERAL MOTORS) | | |
| A | FR-A-2 539 198 (RENAULT) | | |
| A | DE-A-2 634 217 (DAIMLER BENZ) | | DOMAINES TECHNIQUES RECHERCHES (Int. Cl 4) |
| A | GB-A-1 524 387 (AISIN SEIKI K.K.) | | B 60 T 1/00 <br> B 60 B 27/00 <br> B 62 D 7/00 |

Le présent rapport de recherche a été établi pour toutes les revendications

| Lieu de la recherche | Date d'achevement de la recherche | |
|---|---|---|
| LA HAYE | 20-11-1985 | HARTEVELD D.H. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82